# EUROPÄISCHE PATENTSCHRIFT

(11) **EP 4 700 511 B1**
(45) Veröffentlichungstag und Bekanntmachung des Hinweises auf die Patenterteilung: **30.09.2026**
(21) Anmeldenummer: 24195323.1
(22) Anmeldetag: 20.08.2024
(51) Int. Cl.: G05B 19/418

(54) **VORRICHTUNG UND VERFAHREN ZUM BELADEN ODER ENTLADEN EINER BLECH- ODER HOLZBEARBEITUNGSMASCHINE**
DEVICE AND METHOD FOR LOADING OR UNLOADING A SHEET METAL OR WOODWORKING MACHINE
DISPOSITIF ET PROCÉDÉ DE CHARGEMENT OU DE DÉCHARGEMENT D'UNE MACHINE À TRAVAILLER LE BOIS OU LA TÔLE

(43) Veröffentlichungstag der Anmeldung: 25.02.2026
(73) Patentinhaber: ARKU Maschinenbau GmbH, 76532 Baden-Baden (DE)
(72) Erfinder: Burtscher, Jacques, 67480 Roeschwoog (FR); Amyay, Abdessamad, 79106 Freiburg (DE)
(74) Vertreter: Durm Patentanwälte PartG mbB

(56) Entgegenhaltungen:
- EP-A1- 1 586 422
- DE-A1- 102016 120 132
- US-A1- 2019 091 869

## Beschreibung

Die vorliegende Erfindung betrifft eine Vorrichtung und ein Verfahren zum Beladen oder Entladen einer Blech- oder Holzbearbeitungsmaschine. Die vorliegende Erfindung betrifft weiterhin ein System zum Beladen oder Entladen einer Blech- oder Holzbearbeitungsmaschine sowie ein Computerprogrammprodukt.

Bei der Herstellung oder Bearbeitung von Blechen kommt es oft zu Spannungen im Blech oder Verbiegungen des Blechs. Um diese unerwünschten Effekte zu vermindern, werden Richtmaschinen, insbesondere Walzenrichtmaschinen, eingesetzt und Werkstücke aus Blech bearbeitet. Beim Schneiden und Stanzen von Teilen aus Blech bilden sich an den Schnittkanten und den Rändern von Löchern und Ausnehmungen störende Grate, die an der Ober- bzw. Unterseite des Stahlblechs überstehen. Insbesondere bei Teilen, die aus mehreren Zentimeter dickem Stahlblech hergestellt sind, bedarf es größeren technischen Aufwands, diese zu entgraten, also die Kanten zu verrunden und die Oberfläche abzuschleifen.

Insbesondere derartige Blechbearbeitungsmaschinen aber auch Maschinen im Bereich der Holzbearbeitung, werden dabei üblicherweise im Durchlaufbetrieb betrieben. Die zu bearbeitenden Werkstücke kommen auf einer Palette oder einem anderen Ladungsträger an, werden auf ein Transportband aufgelegt und der Bearbeitung zugeführt. Nach der Bearbeitung werden die Werkstücke wieder auf einen Ladungsträger gelegt.

Zur Effizienzsteigerung gibt es in diesem Umfeld Automatisierungsansätze, bei denen Werkstücke mittels Robotern gegriffen und beispielsweise in der Materialbearbeitungsmaschine von einer Bearbeitungsstation zur nächsten überführt werden. Ebenfalls gibt es Ansätze, bei denen ein automatisiertes Be- und Entladen vorgesehen ist.

In diesem Zusammenhang werden in DE 10 2018 218 828 A1 Verfahren und System zum Modifizieren eines Arbeitsprozesses in einer Maschinenanlage und/oder eines virtuellen 3D-Modells der Maschinenanlage offenbart. Das Verfahren ist zur Anwendung in einer realen Maschinenanlage mit wenigstens einer, insbesondere programmierbaren, Maschine, insbesondere einem Roboter, und/oder eines virtuellen 3D-Modells der Maschinenanlage ausgebildet. Das Verfahren umfasst die Schritte: Erfassen von Maschinenanlagensignalen, während der Arbeitsprozess in der Maschinenanlage ausgeführt wird; Speichern von Zeitpunkten und diesen zugeordneten Maschinendaten auf Basis der erfassten Maschinenanlagensignale; Ermitteln von Positions-, Bewegungs- und/oder Statusdaten von wenigstens einem Objekt des virtuellen Modells für wenigstens einen vergangenen Zeitpunkt auf Basis der gespeicherten Zeitpunkte und diesen zugeordneten Maschinendaten; und Darstellen und/oder virtuelles Vermessen des virtuellen Modells der Maschinenanlage auf Basis dieser ermittelten Positions-, Bewegungs- bzw. Statusdaten.

Gerade das Auflegen der Werkstücke auf das Transportband sowie das Abnehmen der Werkstücke nach der Bearbeitung erfolgen aber oft manuell, insbesondere, wenn vergleichsweise kleine Stückzahlen pro Charge verarbeitet werden.

In vielen Anwendungen ist der Aufwand zum Einrichten bzw. Einlernen/Kalibrieren einer Automatisierungslösung größer als deren Nutzen.

Die US 2019/091869 A1 zeigt ein Robotersystem und ein Werkstückgreifverfahren mit einer Sensorschnittstelle, einer Darstellungseinheit, einer Bedienerschnittstelle, einer Auswerteeinheit und einer Steuerschnittstelle. Die Schrift zeigt lediglich eine rudimentäre Bedienereingabe zu einem durchzuführenden Ladevorgang. Darüber hinaus betrifft sie keine Vorrichtung zum Beladen oder Entladen einer Blech- oder Holzbearbeitungsmaschine.

Die DE 10 2016 120132 A1 zeigt ein Verfahren zur Unterstützung einer Sequenz von Bearbeitungsschritten zur Bearbeitung von Werkstücken, die gemäß einem Bearbeitungsplan erzeugt wurden, wobei Werkstücksammelstelleneinheiten zum Sammeln von Werkstücken eingesetzt werden, die eine Signalvorrichtung und eine Anzeigeeinheit zur Ausgabe eines Identifikationssignals, das einem Bediener den Ort einer ausgewählten Werkstücksammelstelleneinheit zum Ablegen des weiterzuverarbeitenden Werkstücks anzeigt, aufweisen.

Die EP 1 586 422 A1 zeigt ein Verfahren zum Handhaben von Werkstücken beim Umsetzen derselben aus einem Gebinde in ein weiteres Gebinde, wobei die Form und Lage des Gebindes, in das die Werkstücke abzusetzen sind, räumlich erfasst wird, und wobei die räumliche Lage des umzusetzenden Werkstückes erfasst wird.

Ausgehend hiervon betrifft die vorliegende Erfindung die Aufgabe, einen Ansatz zum effizienten Be- und Entladen einer Blech- oder Holzbearbeitungsmaschine bereitzustellen. Es sollen sowohl ein hoher Durchsatz als auch eine geringe Fehleranfälligkeit bei gleichzeitig geringen Anforderungen an das Einlernen und an die erforderliche technische Umsetzung bereitgestellt werden. Ein kostengünstig realisierbarer Ansatz, der dennoch eine hohe Effizienzsteigerung ermöglicht, soll bereitgestellt werden.

Zum Lösen dieser Aufgabe betrifft die vorliegende Erfindung in einem ersten Aspekt eine Vorrichtung zum Beladen oder Entladen einer Blech- oder Holzbearbeitungsmaschine, mit:
- einer Sensorschnittstelle zum Empfangen eines Sensorsignals mit Informationen zu Werkstücken in einem Ladebereich der Blech- oder Holzbearbeitungsmaschine;
- einer Darstellungseinheit zum Erzeugen einer Darstellung der Werkstücke und des Ladebereichs basierend auf dem Sensorsignal;
- einer Bedienerschnittstelle zum Bereitstellen der Darstellung an einen Maschinenbediener und zum Empfangen einer Bedienereingabe des Maschinenbedieners mit Informationen zu einer Position der Werkstücke in der Darstellung;
- einer Auswerteeinheit zum Ermitteln einer überarbeiteten Darstellung der Werkstücke und des Ladebereichs basierend auf dem Sensorsignal und der Bedienereingabe, wobei die Bedienerschnittstelle zum Bereitstellen der überarbeiteten Darstellung an den Maschinenbediener und zum Empfangen einer weiteren Bedienereingabe mit Informationen zu einem durchzuführenden Ladevorgang des Werkstücks ausgebildet ist;
- einer Planungseinheit zum Ermitteln von Steuerbefehlen für einen Laderoboter zum Ausführen des durchzuführenden Ladevorgangs basierend auf dem Sensorsignal und der weiteren Bedienereingabe; und
- einer Steuerschnittstelle zum Ansteuern des Laderoboters zum Ausführen des Ladevorgangs basierend auf den Steuerbefehlen.

In einem weiteren Aspekt betrifft die vorliegende Erfindung ein System zum Beladen oder Entladen einer Blech- oder Holzbearbeitungsmaschine, mit:
- einer Vorrichtung wie zuvor beschrieben;
- einem Sensor zum Erfassen des Ladebereichs; und
- einem Laderoboter zum Ausführen des Ladevorgangs basierend auf den Steuerbefehlen, insbesondere einem Industrieroboter mit einem Manipulatorarm.

Weitere Aspekte der Erfindung betreffen ein der Vorrichtung entsprechend ausgebildetes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können die Vorrichtung, das System, das Verfahren und das Computerprogrammprodukt entsprechend der für die Vorrichtung und das System in den abhängigen Ansprüchen beschriebenen Ausgestaltungen ausgeführt sein.

Erfindungsgemäß ist eine Automatisierung des Be- und/oder Entladeprozesses vorgesehen, bei der an zwei Stellen eine Beteiligung eines Maschinenbedieners mitberücksichtigt wird. Über einen Sensor wird eine aktuelle Situation in einem Be- und/oder Entladebereich (Ladebereich) erfasst. Insbesondere werden die Werkstücke (Blech- oder Holzteile) im Ladebereich erfasst. Diese Werkstücke sind beispielsweise auf einer Palette oder auf einem anderen Ladungsträger angeordnet. Es können (jeweils) mehrere Werkstücke, insbesondere mehrere gleichartige Werkstücke, gestapelt sein und aufeinander liegen. Dabei ist die Ausrichtung der Werkstücke vorteilhafterweise innerhalb des Stapels gleich. Die Werkstücke selbst sind vorzugsweise flächige bzw. platte Teile. Beispielsweise können Teile mit einem Gewicht von einigen hundert Gramm bis zu 20 kg oder auch mehr und einer Ausdehnung von einigen Quadratzentimetern bis zu einigen Quadratdezimetern oder mehr verarbeitet werden. Insbesondere können unregelmäßig geformte Blechteile als Werkstücke bearbeitet werden.

Basierend auf dem Sensorsignal wird in einem ersten Schritt eine Darstellung der Werkstücke und des Ladebereichs erzeugt. Diese Darstellung wird dem Maschinenbediener zur Verfügung gestellt, der ausgehend von der Darstellung eine Selektion der Werkstücke vornimmt. Die Selektion wird über eine Bedienereingabe in der Vorrichtung empfangen. Durch die Selektion zeigt der Bediener, an welcher Position innerhalb der Darstellung sich Werkstücke befinden. Die Bedienereingabe dient dann als Grundlage zum automatisierten Überarbeiten der Darstellung.

Dem Maschinenbediener wird in einem zweiten Schritt die überarbeitete Darstellung zur Verfügung gestellt. Der Maschinenbediener gibt in einer weiteren Bedienereingabe Informationen zu einem durchzuführenden Ladevorgang des Werkstücks an. Insbesondere kann er spezifizieren, wie das Werkstück zu greifen ist und an welche Stelle es zum Ausführen des Ladevorgangs zu überführen ist. Insbesondere kann insoweit eine Ladeposition beim Laden der Maschine angegeben werden oder eine Entladeposition des Werkstücks beim Entladen angegeben werden. Beim Laden kann insbesondere eine Positionsangabe in Bezug auf die Durchlaufbreite der Maschine angegeben werden.

Ausgehend von dieser weiteren Bedienereingabe kann dann eine Planung des durchzuführenden Ladevorgangs im Sinne einer Ermittlung von Steuerbefehlen für den Laderoboter erfolgen und der Laderoboter zur Durchführung des Ladevorgangs angesteuert werden. Insbesondere kann ein Industrieroboter mit entsprechendem Manipulatorarm und entsprechender Greifvorrichtung angesteuert werden.

Im Vergleich zu bisherigen Ansätzen, bei denen ein manuelles Be- und/oder Entladen der Werkstücke erfolgt, ermöglicht der Ansatz der vorliegenden Erfindung einen Effizienzgewinn. Es wird möglich, das Laden zum großen Teil zu automatisieren und insoweit Personaleinsatz einzusparen. Es ergeben sich Effizienzvorteile. Der Einsatz des Maschinenbedieners ist lediglich zum Spezifizieren der beiden Bedienereingaben notwendig. Der Beitrag des Maschinenbedieners ist der Bearbeitung vorgelagert. Dies bedingt gegebenenfalls eine etwas verlängerte Rüstzeit. Der Ladevorgang an sich kann dann aber automatisiert durch einen Laderoboter und ohne weitere Eingriffe des Maschinenbedieners durchgeführt werden.

Im Vergleich zu einer vollständigen Automatisierung, beispielsweise mit einer Bilderkennung der Werkstücke/Greifposition und der Ablageposition, ermöglicht der erfindungsgemäße Ansatz eine Verbesserung der Sicherheit bzw. eine Erhöhung der Effizienz. Insbesondere kann der Aufwand für die Erfassung des Ladebereichs (benötigte Sensoren etc.) sowie der Aufwand für die automatisierte Verarbeitung der gewonnenen Sensordaten (Einsatz von automatisierten Datenverarbeitungsansätzen etc.) verringert werden. Zudem kann auf zusätzliche Maschinenschutzvorrichtungen zum Abfangen von Fehlern verzichtet werden. Des Weiteren ist ein Verzicht auf komplexe und aufwändige Einlern- und Kalibrierungsvorgänge möglich. Es ist nicht notwendig, den Roboter in einem umfangreichen Einlern- bzw. Kalibrierungsvorgang ausführlich zu trainieren, um genaue Vorgaben hinsichtlich des Aufnehmens und Ablegens der Werkstücke vorzugeben. Durch die Berücksichtigung zweier Bedienereingaben kann insoweit eine Automatisierung des Beladens erreicht werden, die ein effizientes Abarbeiten insbesondere bei vergleichsweise kleinen Stückzahlen und hohen Freiheitsgraden im Hinblick auf die Gestaltung der Werkstücke ermöglicht.

In einer bevorzugten Ausgestaltung ist die Sensorschnittstelle zum Empfangen eines Sensorsignals mit einem Farbbild (optional: Schwarz-Weiß-Bild) und einem Tiefenbild der Werkstücke in dem Ladebereich ausgebildet. Insbesondere kann das Sensorsignal von einer, zwei oder mehr Kameras empfangen werden. Diese Kameras sind auf den Ladebereich gerichtet. Durch die Verwendung einer Farbkamera und einer Tiefenkamera können unterschiedliche Informationsquellen zur Verfügung gestellt werden, deren Signale im weiteren Verlauf vorteilhaft kombiniert werden können. Zudem sind entsprechende Kamera-/Tiefenkamerasysteme technisch fortgeschritten und einfach/kostengünstig verfügbar. Des Weiteren kann auf verfügbare und hoch entwickelte Bildverarbeitungsalgorithmen zurückgegriffen werden, die eine geringe Fehleranfälligkeit ermöglichen. Es ergibt sich eine hohe Effizienz bei geringen Kosten.

In einer bevorzugten Ausgestaltung ist die Auswerteeinheit zum Erzeugen einer Bilddarstellung ausgebildet. Insbesondere, wenn über die Sensorschnittstelle ein Signal einer Kamera empfangen wird, kann auf dieser Basis eine Bilddarstellung erzeugt und dem Maschinenbediener zur Verfügung gestellt werden. Hierzu können Verarbeitungsschritte, wie beispielsweise eine Anpassung von Kontrast und/oder Helligkeit vorgesehen sein. Es können aber auch komplexere Verarbeitungen, wie beispielsweise eine Koordinatentransformation etc. vorgenommen werden. Die Darstellung wird dem Maschinenbediener zur Verfügung gestellt, sodass dieser in effizienter Weise eine Bedienereingabe liefern kann. Insbesondere ist bei der Verwendung einer Bilddarstellung vorteilhaft, dass auch ungeschultes bzw. in dieser Hinsicht ungeschultes Maschinenbedienpersonal intuitiv ein Verständnis der Darstellung entwickeln und die entsprechende Bedienereingabe liefern kann.

In einer bevorzugten Ausgestaltung umfasst die Bedienerschnittstelle ein Display, insbesondere ein Touchscreen-Display. Über ein Touchscreen-Display wird eine einfache und effiziente Ausgabe der Darstellung und Entgegennahme der Bedienereingabe ermöglicht. Eine intuitive Bedienung ist möglich. Aufwändige Schulungen bzw. eine aufwändige Einarbeitung des Maschinenbedieners können vermieden werden. Zudem wird die Fehleranfälligkeit reduziert.

In einer bevorzugten Ausgestaltung ist die Bedienerschnittstelle zum Empfangen einer weiteren Bedienereingabe mit einer Position eines Greifpunkts des Laderoboters an dem Werkstück ausgebildet. Zusätzlich oder alternativ ist die Bedienerschnittstelle zum Empfangen einer weiteren Bedienereingabe mit einer Ablageposition des Werkstücks ausgebildet. Zusätzlich oder alternativ ist die Bedienerschnittstelle zum Empfangen einer Ausrichtung des Werkstücks bei der Ablage ausgebildet. Unter einem Greifpunkt wird hierin insbesondere diejenige Stelle oder derjenige Bereich oder auch diejenigen Stellen an dem Werkstück verstanden, an denen dieses zum Greifen berührt wird. Je nach Art des Greifsystems des Laderoboters (ein oder mehrere Punkte, an denen das Werkstück berührt wird, Magnetgreifer, etc.), wird unter einer Position des Greifpunkts also insbesondere eine Ausrichtung des Greifsystems gegenüber dem Werkstück verstanden. Eine Ablageposition des Werkstücks ist diejenige Stelle, an der es bei einem Ladevorgang zur Weiterverarbeitung abgelegt wird bzw. bei einem Entladevorgang zur Lagerung/Weiterverarbeitung/Weitertransport abgelegt wird. Eine Ausrichtung des Werkstücks betrifft dessen dreidimensionale oder zweidimensionale Lage beim Ablegen. Diese weitere Bedienereingabe kann insbesondere ebenfalls über Berührung eines Touchscreen-Displays empfangen werden. Es versteht sich, dass auch andere Eingaben möglich sind. Die weitere Bedienereingabe kann auch mehrere entsprechende Informationen umfassen. Es ergibt sich eine effiziente Bedienbarkeit. Eine einfache Spezifizierung der notwendigen Prozessparameter wird ermöglicht.

In einer bevorzugten Ausgestaltung ist die Auswerteeinheit zum Ermitteln einer Oberflächenebene eines Werkstücks basierend auf einer Segmentierung und basierend auf der Bedienereingabe ausgebildet. Insbesondere kann hierbei ein RANSAC- (Random Sample Consensus-) Algorithmus angewendet werden.

Zusätzlich oder alternativ ist die Auswerteeinheit zum Ermitteln einer orthografischen Ansicht ausgebildet. Sowohl Bilddaten einer Farbbildkamera als auch Bilddaten einer Tiefenbildkamera können segmentiert werden. Insbesondere kann eine Segmentierung auf Basis von Farbbilddaten vorgesehen sein. In anderen Worten wird also ausgehend von einer einfachen Bedienerangabe bzw. Selektion, bei der beispielsweise ein einzelner Punkt, der zum Werkstück gehört, durch den Maschinenbediener vorgegeben wird, eine effiziente Erkennung des Werkstücks ermöglicht. Ausgehend von dieser Erkennung kann dann eine orthografische Ansicht ermittelt werden. Eine orthografische Ansicht ist dabei insbesondere eine Ansicht, bei der alle Teile des Werkstücks im gleichen Maßstab erscheinen und insoweit eine einfache Beurteilung der relativen Größen und Ausrichtung der Werkstücke ermöglicht wird. Insbesondere erfolgt also eine Umwandlung einer perspektivischen Ansicht einer auf den Ladebereich ausgerichteten Sensors in eine orthografische Ansicht, bei der dem Maschinenbediener eine verbesserte und effiziente Beurteilung der Werkstücke zur Spezifizierung des Ladevorgangs ermöglicht wird. Es ergibt sich eine effiziente Verarbeitung.

In einer bevorzugten Ausgestaltung ist die Planungseinheit zum Ermitteln von Steuerbefehlen mit Greif- und Ablagekoordinaten des Werkstücks ausgebildet. Insbesondere können 6D-Koordinaten (Position und Orientierung) ermittelt werden. Die Bahnplanung an sich kann dann ausgehend von vorgegebenen Standardansätzen durchgeführt werden. Zudem können entsprechende Transformationen vorgenommen werden. Es ergibt sich eine effiziente Verarbeitbarkeit.

In einer bevorzugten Ausgestaltung ist die Planungseinheit zum Ermitteln der Steuerbefehle basierend auf vordefinierten und auf den Ladebereich bezogenen Bahnvorgabedaten für die Bewegung des Laderoboters ausgebildet. Die Bahnvorgabedaten wurden dabei vorzugsweise in einem Kalibrierungsprozess ermittelt. Zusätzlich oder alternativ ist die Planungseinheit zum Ermitteln der Steuerbefehle basierend auf vordefinierten und auf den Ladebereich bezogenen Sensorpositionsdaten für die Position des Sensors ausgebildet. Diese Sensorpositionsdaten wurden dabei vorzugsweise in einem Kalibrierungsprozess ermittelt, beispielsweise im Rahmen einer Inbetriebnahme. Die Miteinbeziehung von Bahnvorgabedaten kann dabei insbesondere einer Miteinbeziehung von Daten, die für den Ladebereich spezifisch sind, entsprechen. Insbesondere kann in einem einmaligen Vorgang bei der Installation des Ladebereichs festgelegt werden, wie sich der Laderoboter innerhalb des Ladebereichs bewegen kann und welche Bewegungen insoweit möglich bzw. vorteilhaft sind. Diese Vorgabe kann einmalig erfolgen. In der erfindungsgemäß vorgesehenen Einrichtung/Initialisierung des einzelnen Ladevorgangs können diese Daten dann berücksichtigt werden. Es ist insoweit also nicht notwendig, für jeden einzelnen Ladevorgang von mehreren Teilen eine entsprechende Kalibrierung vorzunehmen. Eine einmalige Kalibrierung beispielsweise bei Inbetriebnahme genügt, um dann verschiedene Werkstücke laden zu können. Dies gilt in entsprechender Weise auch für Sensorpositionsdaten. Diese Sensorpositionsdaten beschreiben insbesondere eine Position sowie auch eine Ausrichtung des Sensors in Bezug auf den Ladebereich. Insbesondere kann die Ausrichtung und Position einer Kamera als Sensorpositionsdaten einmalig vorgegeben und dann jeweils bei der Planung in der Planungseinheit berücksichtigt werden. Es ergibt sich eine weitere Effizienzverbesserung, da die Bahnvorgabedaten sowie auch die Sensorpositionsdaten nur einmalig ermittelt werden müssen und dann in verschiedenen Ladevorgängen verwendet werden können.

In einer bevorzugten Ausgestaltung ist die Bedienerschnittstelle zum Empfangen einer Bedienereingabe mit einer Dicke der Werkstücke ausgebildet. Insbesondere wenn Werkstücke gestapelt sind oder gestapelt werden sollen, ist die zusätzliche Eingabe der Dicke eine vorteilhafte Zusatzinformation. Mittels der Dicke kann dann eine entsprechende Ansteuerung des Laderoboters ermöglicht werden. Es ist nicht erforderlich, dass beispielsweise zusätzliche Sensoren diese Dicke erfassen. Insoweit kann die Effizienz weiter verbessert werden. Kosten können reduziert werden. Üblicherweise sind Teile gleicher Kontur auch gleich dick. Sollte dies nicht der Fall sein, kann die Dicke auch mittels entsprechender Sensorik erfasst werden.

In einer bevorzugten Ausgestaltung ist die Bedienerschnittstelle zum Empfangen einer Bedienereingabe mit Informationen zu einer Position von Werkstücken in einer oberen von mehreren Schichten von Werkstücken in der Darstellung ausgebildet. Die Planungseinheit ist zum Erkennen eines Versatzes eines Werkstücks in einer zweiten Schicht nach einem Ladevorgang eines Werkstücks in einer ersten Schicht ausgebildet. Die Planungseinheit ist zum Ermitteln der Steuerbefehle basierend auf dem Versatz ausgebildet. Insbesondere können also Werkstücke, die gestapelt sind, automatisiert verarbeitet werden. Beispielsweise können Werkstücke in Stapeln auf einer Palette geliefert werden. Der Maschinenbediener selektiert die Position eines Werkstücks in einer oberen Schicht. Ausgehend von dieser Angabe kann dann eine automatische Verarbeitung des gesamten Stapels der Werkstücke erfolgen, wenn der Versatz ermittelt wird. Insbesondere vorteilhaft ist es, wenn hierzu auch die Dicke der Werkstücke als Zusatzinformation vorhanden ist.

In einer bevorzugten Ausgestaltung des erfindungsgemäßen Systems umfasst der Sensor eine auf einen Ladebereich der Blech- oder Holzbearbeitungsmaschine gerichtete Farbkamera und/oder eine Tiefenkamera. Die Verwendung derartiger Kameras ermöglicht eine effiziente Implementierung bei vergleichsweise geringen Kosten. Zudem kann auf bestehende Standard-Bildverarbeitungsansätze zurückgegriffen werden, die eine hohe Effizienz ermöglichen.

In einer bevorzugten Ausgestaltung des Systems ist der Laderoboter zum Ausführen eines Ladevorgangs ausgebildet. Der Sensor ist zum Erfassen eines Ladebereichs ausgebildet. Das System umfasst einen weiteren Laderoboter zum Ausführen eines Entladevorgangs. Das System umfasst weiterhin einen weiteren Sensor zum Erfassen eines Entladebereichs und zum Bereitstellen eines Sensorsignals mit Informationen zu Werkstücken in dem Entladebereich. Die Planungseinheit ist zum Ermitteln von Steuerbefehlen für den weiteren Laderoboter zum Ausführen eines durchzuführenden Entladevorgangs basierend auf dem Sensorsignal, dem weiteren Sensorsignal und der weiteren Bedienereingabe ausgebildet. Die Steuerschnittstelle ist zum Ansteuern des weiteren Laderoboters zum Ausführen des Entladevorgangs basierend auf den Steuerbefehlen ausgebildet. Es wird zusätzlich zum Laderoboter ein weiterer Laderoboter eingesetzt. Insoweit dient der Laderoboter zum Beladen der Blech- oder Holzbearbeitungsmaschine und der weitere Laderoboter zum Entladen. Der weitere Sensor erfasst den Entladebereich. Insbesondere werden erfindungsgemäß die für den Beladeprozess erfassten Informationen hinsichtlich der Werkstücke auch beim Entladevorgang verwendet. Beispielsweise kann also ein Gitternetzmodell des Werkstücks erzeugt werden ausgehend von der Bedienereingabe und der weiteren Bedienereingabe beim Beladen. Dieses Gitternetzmodell oder auch eine andere Information kann dann beim Entladen der Maschine dem weiteren Laderoboter zur Verfügung gestellt werden bzw. bei dessen Ansteuerung berücksichtigt werden. Es ergibt sich eine weiter verbesserte Effizienz.

Unter einer Blech- oder Holzbearbeitungsmaschine verstehet sich hierin insbesondere eine Maschine zum Bearbeiten einzelner Teile mit einer Größe, die eine Handhabbarkeit mittels eines Industrieroboters ermöglichen. Insbesondere sollen auf Paletten oder vergleichbaren Ladungsträgern angelieferte Werkstücke verarbeitet werden. Insbesondere sollen Werkstücke mit unterschiedlichen Konturen bzw. unterschiedlichen Formen verarbeitet werden. In einem Prozessschritt sollen mehrere gleichartige Werkstücke verarbeitet werden. Im nächsten Prozess sollen dann aber andere anders geformte Werkstücke verarbeitet werden. Unter einer Darstellung versteht sich insbesondere, aber nicht ausschließlich, eine Bilddarstellung bzw. eine bildhafte Darstellung. Ein Industrieroboter bzw. ein Laderoboter ist hierin insbesondere ein industrieller Manipulator bzw. ein Roboter mit einem Manipulatorarm, der zur Handhabung von Werkstücken ausgebildet ist. Unter einem Ladebereich versteht sich hierin insbesondere ein Bereich an einer bzw. um eine Blech- oder Holzbearbeitungsmaschine. Der Ladebereich umfasst einen Stellplatz eines Ladungsträgers bzw. einen Bereich von Werkstücken. Der Ladebereich umfasst auch den Aufnahme- bzw. Abgabebereich der Maschine (Maschineneinlassbereich/Maschinenauslassbereich). Sowohl ein Beladebereich als auch ein Entladebereich können als Ladebereich bezeichnet werden. Insbesondere kann ein Beladebereich gemeint sein.

Der erfindungsgemäße Ansatz kann auch eine Bedienereingabe einer Orientierung der Werkstücke bei einem Schleif- oder Richtvorgang ermöglichen. In der Regel bedingt ein Schleifvorgang ein definiertes Schliffbild in eine Richtung. Insoweit kann der Maschinenbediener beim Ablegen des Werkstücks eine Orientierung des Schliffbilds vorgeben. Beim Richten kann der Bediener die Orientierung auswählen gemäß der Ausrichtung der Wölbung, um gezielt diese abzubauen.

Die vom Maschinenbediener eingegebenen Konturen und Greifpunkte können abgespeichert werden. Eine Datenbank mit Werkstücken, Greifpunkten und Orientierungen sowie dazugehörigen Maschineneinstellungen (bspw. eingesetzte Schleifmittel, Schleifmittelzustellungen, Schleifmittelgeschwindigkeiten, Richtspalteinstellungen, Förderbandgeschwindigkeit etc.) kann aufgebaut werden. Bei wiederkehrenden Aufträgen kann auf diese Daten zurückgegriffen und die Rüstzeit reduziert werden. Beispielsweise können dem Maschinenbediener erkannte Werkstücke im Bild vorgeschlagen und von diesem ggf. bestätigt werden. Ferner kann ein auf den Ladungsträger bezogenes Rezept angelegt werden. Bei wiederkehrendem Ladungsträger kann dieses wieder aufgerufen/abgearbeitet werden.

Es ist möglich, dass mehrere Greifsysteme eingesetzt werden. Das Greifsystem kann mittels eines Magazins automatisch gewechselt werden. Unterschiedliche Werkstück-Geometrien können sicher gegriffen werden. Es ist möglich, dass in der Benutzeroberfläche ein Greifsystem dargestellt wird. Wenn das Greifsystem mehrere Greifpunkte umfasst, kann dem Maschinenbediener ggf. die Position der einzelnen Greifpunkte auf dem Werkstück angezeigt werden. Er kann dann ggf. die Greifpunkte derart positionieren, dass sich diese (mehrheitlich) nicht an einer offenen Stelle (Loch) des Werkstückes befinden, um ein sicheres Greifen zu gewährleisten. Ergibt sich kein sicherer Griff, kann der Maschinenbediener ein anderes Greifsystem auswählen, welches besser zu dem zu greifenden Werkstück passt.

Für nicht flache Werkstücke kann ggf. die Teileoberfläche für jedes Werkstück neu berechnet werde.

Dem Maschinenbediener kann bei der Eingabe der Ladeposition ausgehend von der bekannten Förderbandgeschwindigkeit eine Visualisierung des im Stapel nächstliegenden Werkstückes angezeigt werden. Aus der Fläche der Werkstücke und aus den Stapelhöhen kann eine Auslastungsverteilung entlang der Maschinenbreite ermittelt werden. Diese Auslastungsverteilung kann dem Maschinenbediener angezeigt werden. Beispielsweise kann der Maschinenbediener hierauf basierend eine Gleichverteilung festlegen, um einen gleichmäßigen Verschleiß der Schleifmittel in einer Schleifmaschine bzw. einen gleichmäßigen Verschleiß der Richtwalzen in einer Richtmaschine zu erreichen. Optional kann dem Maschinenbediener eine ideale Ladeposition vorgeschlagen werden.

In einer bevorzugten Ausgestaltung sind Werkstücke gleicher Kontur aufeinandergestapelt auf dem Ladungsträger. Auf einer Bildaufnahme sind alle möglichen Konturen erkennbar. Es gibt keine Abdeckungen bzw. zunächst abgedeckte weitere Konturen. Der Maschinenbediener kann nach dem Rüstvorgang die Anlage verlassen und die Werkstücke können automatisiert abgearbeitet werden.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische Darstellung eines erfindungsgemäßen Systems zum Beladen oder Entladen einer Blech- oder Holzbearbeitungsmaschine;
- Figur 2: eine schematische Darstellung einer erfindungsgemäßen Vorrichtung;
- Figur 3: eine schematische Darstellung der Datenflüsse und der Interaktion des Maschinenbedieners mit dem erfindungsgemäßen System in einer Ausführungsform;
- Figur 4: eine schematische Darstellung des Ablaufs des erfindungsgemäßen Ansatzes in einer Ausführungsform;
- Figur 5: eine schematische Darstellung einer optionalen Modifikation des Ablaufs des erfindungsgemäßen Ansatzes;
- Figur 6: eine schematische Darstellung einer optionalen Modifikation des erfindungsgemäßen Ansatzes; und
- Figur 7: eine schematische Darstellung eines erfindungsgemäßen Verfahrens.

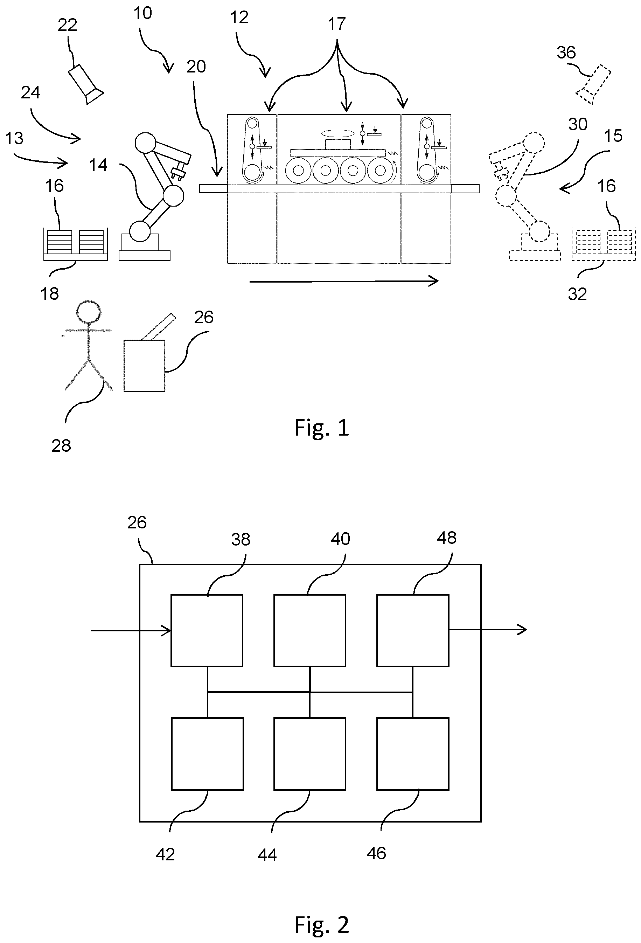

In Figur 1 ist schematisch ein erfindungsgemäßes System 10 zum Beladen oder Entladen einer Blech- oder Holzbearbeitungsmaschine 12 dargestellt. Insbesondere ist eine Blechbearbeitungsmaschine, nämlich eine Entgratmaschine schematisch dargestellt. Die Blech- oder Holzbearbeitungsmaschine 12 arbeitet im Durchlaufbetrieb entlang des Pfeils. Insbesondere ist ein Transportband in der Maschine vorgesehen, das die Werkstücke 16 vom Beladebereich 13 in den Entladebereich 15 fördert. In der Blech- oder Holzbearbeitungsmaschine 12 erfolgt eine Bearbeitung an einer (oder mehreren) Bearbeitungsstationen 17. Das System 10 umfasst einen Laderoboter 14, der dazu ausgebildet ist, in einem Ladevorgang Werkstücke 16 von einem Ladungsträger 18 in einen Aufnahmebereich 20 der Blechbearbeitungsmaschine zu überführen. Die Werkstücke 16 können insbesondere gestapelt, wie dargestellt, auf dem Ladungsträger 18 der Maschine zugeführt werden. Das System 10 umfasst weiterhin einen Sensor 22, im dargestellten Ausführungsbeispiel einen Kamerasensor, der dazu ausgebildet ist, einen Ladebereich 24 (im dargestellten Beispiel insbesondere den Beladebereich) zu erfassen. Zudem umfasst das System 10 eine Vorrichtung 26, die mit dem Sensor 22 und dem Laderoboter 14 interagiert. Im dargestellten Ausführungsbeispiel ist die Vorrichtung 26 als Industrie-PC ausgebildet, der von einem Maschinenbediener 28 bedient wird.

Der Ansatz der vorliegenden Erfindung betrifft insbesondere eine teilweise Automatisierung des Be- und/oder Entladevorgangs einer Blech- oder Holzbearbeitungsmaschine. Insbesondere soll durch eine gezielte Einbeziehung von Bedienereingaben eine effiziente und einfach implementierbare Teilautomatisierung ermöglicht werden.

Im dargestellten Ausführungsbeispiel ist eine (optionale) Ausführungsform des Systems 10 dargestellt, bei der zum Entladen ein weiterer Laderoboter 30 vorgesehen ist. Dieser weitere Laderoboter 30 entnimmt die Werkstücke 16 vom Transportband der Blech- oder Holzbearbeitungsmaschine 12, nachdem diese bearbeitet wurden. Die Werkstücke werden dann in einem weiteren Ladungsträger 32 abgelegt. Der Entladebereich 15 wird mittels eines weiteren Sensors 36 erfasst. Es wird ein Sensorsignal mit Informationen zu den Werkstücken 16 im Entladebereich 15 erzeugt. Mittels dieser optionalen Ergänzung können beim Beladen erfasste Daten auch für den Entladevorgang verwendet werden.

In Figur 2 ist schematisch eine erfindungsgemäße Vorrichtung 26 zum Beladen oder Entladen einer Blech- oder Holzbearbeitungsmaschine dargestellt. Die Vorrichtung 26 umfasst eine Sensorschnittstelle 38, eine Darstellungseinheit 40, eine Bedienerschnittstelle 42, eine Auswerteeinheit 44, eine Planungseinheit 46 sowie eine Steuerschnittstelle 48. Die verschiedenen Einheiten können dabei teilweise oder vollständig in Soft- und/oder in Hardware umgesetzt sein. Insbesondere können die Einheiten als Prozessor, Prozessormodule oder auch als Software für einen Prozessor ausgebildet sein. Die Vorrichtung 26 kann beispielsweise in Form eines Industrie-PCs implementiert sein. Ebenfalls ist es möglich, dass die Vorrichtung bzw. an der Vorrichtung entsprechend ausgebildetes Verfahren als Software für ein Maschinensystem einer Blechbearbeitungsmaschine ausgebildet ist. Beispielsweise kann die Funktionalität der Vorrichtung 26 in Software implementiert sein, wobei die Software auf einem Maschinensystem einer Blechbearbeitungsmaschine ausgeführt wird. Ebenfalls ist es aber auch möglich, dass die Vorrichtung 26 als Zusatzgerät ausgebildet ist, das mit einem Maschinensystem der Blechbearbeitungsmaschine, einem Laderoboter und der entsprechenden Sensorik drahtgebunden oder drahtlos verbunden ist.

Die Sensorschnittstelle 38 ist an den Sensor angebunden, insbesondere kann der Sensor eine Farbkamera und eine Tiefenkamera umfassen. Es kann insoweit ein Farbbild und ein Tiefenbild der Werkstücke im Ladebereich sowie des ganzen Ladebereichs empfangen werden.

Die Darstellungseinheit 40 dient zum Erzeugen einer Darstellung der Werkstücke und des Ladebereichs basierend auf dem Sensorsignal. Insbesondere wird ausgehend vom Sensorsignal eine durch einen Maschinenbediener erfassbare Darstellung erzeugt, insbesondere eine Bild, vorzugsweise eine Live-Bild. Die Darstellungseinheit 40 kann dabei lediglich ein empfangenes Bild weitergeben oder auch Bildbearbeitungsoperationen ausführen.

Die Bedienerschnittstelle 42 ist zum Interagieren mit dem Maschinenbediener ausgebildet. Insbesondere kann die Bedienerschnittstelle 42 ein Touchscreen-Display umfassen. Ebenfalls ist die Verwendung eines anderen Displays möglich. Über die Bedienerschnittstelle 42 wird eine Interaktion mit dem Maschinenbediener ermöglicht. Insbesondere kann der Maschinenbediener Daten eingeben und eine Datenausgabe ersehen bzw. empfangen. Insbesondere kann die Darstellung angezeigt werden. Insbesondere kann eine Bilddarstellung angezeigt werden. Der Maschinenbediener kann anhand der Bilddarstellung dann Positionen der Werkstücke in der Darstellung eingeben bzw. selektieren. Insbesondere kann der Maschinenbediener jeweils einen Punkt eines Werkstücks selektieren. Hierzu kann beispielsweise eine Touch-Eingabe (Anklicken) verwendet werden. Der Maschinenbediener selektiert insbesondere jeweils ein Werkstück pro Stapel von Werkstücken (das oberste) bzw. ein Punkt für jedes obenliegende Werkstück. Damit wird eine aufwändige Bilddatenverarbeitung und automatisierte Erkennung von Werkstücken vermieden. Dies bedingt eine wesentliche Vereinfachung, da bei komplexen Werkstückformen ansonsten aufwändige Einlern- bzw. Auswerteprozesse notwendig wären.

Die Auswerteeinheit 44 ermittelt, basierend auf der Bedienereingabe des Maschinenbedieners, eine überarbeitete Darstellung der Werkstücke und des Ladebereichs. Hierzu wird sowohl die Bedienereingabe als auch das Sensorsignal verwendet/ausgewertet. Insbesondere kann eine Oberflächenebene des Werkstücks bzw. der Werkstücke ermittelt werden. Hierzu kann insbesondere eine Segmentierung eingesetzt werden. Hierzu kann beispielsweise ein RANSAC-Algorithmus eingesetzt werden. Es wird also ausgehend von der Eingabe, durch die ein Punkt des Werkstücks definiert wird, der gesamte Umriss des Werkstücks erkannt. Zudem kann eine orthographische Ansicht des Werkstücks erzeugt werden. Eine solche versteht sich insbesondere als maßstabsgetreue Ansicht, bei der keine Verzerrungen mehr enthalten sind. Dies ist insbesondere vorteilhaft, wenn beispielsweise eine schräg ausgerichtete Kamera zum Erfassen des Bildes verwendet wird, auf diesem Bild durch den Maschinenbediener die Werkstücke selektiert werden und dann eine weitere Verarbeitung erfolgen soll.

Nach Ermittlung der überarbeiteten Darstellung wird über die Bedienerschnittstelle 42 diese überabeitete Darstellung wieder dem Maschinenbediener rückgekoppelt. Dieser gibt in einer erneuten Bedienereingabe Informationen zu einem durchzuführenden Ladevorgang des Werkstücks ein. Insbesondere wird durch die weitere Bedienereingabe eine Position eines Greifpunkts des Laderoboters an dem Werkstück festgelegt. Beispielsweise kann je nach Art des Werkstücks eine Greifpunktposition bzw. eine Angreifpunktfestlegung derart erfolgen, dass sichergestellt ist, dass das Werkstück effizient gegriffen und am Manipulatorarm des Laderoboters festgelegt werden kann. Durch die Verwendung einer Eingabe eines Maschinenbedieners kann auf dessen Erfahrung zurückgegriffen werden. Insbesondere wird durch den Maschinenbediener manuell festgelegt, wie das Werkstück zu greifen ist, um in dieser Weise eine aufwändigere Datenverarbeitung zu vermeiden.

Des Weiteren kann die weitere Bedienereingabe eine Ablageposition des Werkstücks umfassen. Insbesondere kann diese Ablageposition in einem Ablagebereich, insbesondere auf einem Transportband der Holz- oder Blechbearbeitungsmaschine festgelegt werden. Der Maschinenbediener kann also, beispielsweise bei hinterlegtem Bild des Ladebereichs durch eine grafische Visualisierung, eine entsprechende Ablageposition festlegen. Der Maschinenbediener gibt die Ablageposition vor. Selbstverständlich kann hierbei eine weitere Automatisierung darin bestehen, dass sequentiell unterschiedliche/variierende Ablagepositionen vorgeben werden, um beispielsweise die volle Breite eines Transportbands auszunutzen. Zudem ist es vorteilhaft, wenn der Maschinenbediener eine Ausrichtung des Werkstücks bei der Ablage vorgibt. Insbesondere geht es insoweit also darum, in welcher Ausrichtung die Werkstücke der Maschine zugeführt werden sollen. In allen Fällen ersetzt die Eingabe des Maschinenbedieners durch die weitere Bedienereingabe eine vergleichsweise aufwändige Datenverarbeitung und bedingt einen Effizienzgewinn.

Die Planungseinheit 46 dient zum Ermitteln von Steuerbefehlen für den Laderoboter. Hierbei wird die weitere Bedienereingabe sowie das Sensorsignal zugrunde gelegt. Es wird also ausgehend von diesen Daten festgelegt, wie der Laderoboter das Werkstück in die Blech- oder Holzbearbeitungsmaschine 12 einlegt. Insbesondere können entsprechende Greif- und Ablagekoordinaten ermittelt werden. Hierzu erfolgt eine entsprechende Umrechnung. Optional ist es dabei möglich, dass bei der Planung Bahnvorgabedaten verwendet werden. Derartige Bahnvorgabedaten dienen zur Spezifizierung von auf den Ladebereich bezogenen Vorgaben. Derartige Vorgaben können beispielsweise Wegpunkte in der Bahn des Laderoboters sein. Zudem können Richtungen und Geschwindigkeiten etc. vorgegeben werden. Diese Bahnvorgabedaten können beispielsweise bei der Inbetriebnahme des erfindungsgemäßen Systems einmalig hinterlegt werden und insoweit Besonderheiten des aktuellen Einsatzorts bzw. der Roboterzelle reflektieren. Des Weiteren ist es in entsprechender Weise möglich, Sensorpositionsdaten zu berücksichtigen. Diese spiegeln die Sensorposition wider, also die Lage und Ausrichtung des Sensors in Bezug auf den Ladebereich. Auch die Sensorpositionsdaten sind insoweit Anwendungsfall- bzw. Anwendungsbereich-spezifisch und können beispielsweise einmalig bei einer Inbetriebnahme der erfindungsgemäßen Vorrichtung bzw. des erfindungsgemäßen Systems an einem Einsatzort hinterlegt werden. Sowohl die Bahnvorgabedaten also auch die Sensorpositionsdaten können dabei in einem Kalibrierungsvorgang ermittelt werden.

Beispielsweise wird durch den Maschinenbediener das oberste Werkstück eines Stapels selektiert. Dieses selektierte Teil ist nach dem Greifen nicht mehr im Bild vorhanden. Die aufgenommene/ermittelte Geometrie (Kontur) dieses Teils und die Greifposition kann dann insbesondere für die zwei folgenden Zwecke benutzt werden:
- Erkennen und Greifen des Teils nach der Bearbeitung zum Entladen;
   und
- Erkennen und Greifen des nächsten Teils im Stapel.

Bei einem Ladungsträger mit mehreren gleichen Teilen kann das selektierte Teil bzw. dessen Kontur im Bild gesucht werden und in dieser Weise auch in weiteren Stapeln erkannt werden. Die angegebene Greifposition kann dann auf die weiteren Stapel übertragen werden.

Die Bedienerschnittstelle 42 kann zudem auch zum Empfangen einer Dicke der Werkstücke ausgebildet sein. Dies ist insbesondere vorteilhaft, wenn in Stapeln zugelieferte Werkstücke verarbeitet werden sollen. Durch die Vorgabe der Dicke der Werkstücke durch den Maschinenbediener kann eine weitere Vereinfachung erreicht werden. Insbesondere wird erreicht, dass der Laderoboter vergleichsweise schnell zur entsprechenden Greifposition fahren kann, ohne eine Kollision abfangen zu müssen. Insbesondere kann über die Bedienerschnittstelle 42 eine Position von gleichartigen Werkstücken, die in mehreren Schichten aufeinander liegen, empfangen werden.

Über die Steuerschnittstelle 48 wird der Laderoboter angesteuert. Insbesondere kann ein Industrieroboter mit einem Manipulatorarm angesteuert werden.

Der erfindungsgemäße Ansatz dient dem Automatisieren bzw. Teilautomatisieren des Be- und Entladevorgangs bei Blech- und Holzbearbeitungsmaschinen. insbesondere dient das erfindungsgemäße System dazu, Bleche am Maschineneingang von einem Ladungsträger auf ein Förderband der Bearbeitungsmaschinen zu überführen. Zusätzlich kann auch am Maschinenausgang das Blech vom Förderband wieder entnommen werden und auf den Ladungsträger abgelegt werden.

Grundsätzlich benötigt der Prozess des Beladens von Werkstücken auf eine Maschine bzw. eine an einer Maschine angebundene Fördertechnik Informationen über die Lage der zu beladenden Werkstücke sowie die Punkte, die das Beladungssystem bzw. der Laderoboter anfahren und/oder angreifen muss. Diese anzufahrenden Greifkoordinaten können entweder aufgerufen (vordefinierte Lagen auf einer Palette: "Rezepte"), ermittelt (KI-Kamerasysteme: Generative Griffpunktermittlung auf unbekannten Teilen oder Teileerkennung und Aufrufen gespeicherter Griffpunkte auf dem Teil) oder in einem Lernprozess beigebracht (Teaching: Das Definieren anzufahrender Punkte durch eine Ansteuerung des Roboters mit dem entsprechenden Vorgang) werden. Die Ablagepunkte können in entsprechender Weise eingebracht werden durch eine generative Koordinatenerzeugung, vordefinierte Koordinaten oder Einlernen. Mit den Griffpunkten kann dann eine Bahnplanung des Laderoboters durchgeführt werden.

Der erfindungsgemäße Ansatz ermöglicht eine Vereinfachung und eine Reduzierung der Fehleranfälligkeit sowie eine Verbesserung der Robustheit, insbesondere bei sich ändernden Randbedingungen (z. B. Belichtungsverhältnisse). Ebenfalls können Einlernvorgänge zu hohen Aufwänden führen. Der erfindungsgemäße Ansatz bindet an zwei Stellen des Prozesses die Maschinenbediener ein und ermöglicht durch Berücksichtigung dessen Eingaben eine Verbesserung der Robustheit bei deutlicher Reduzierung des Aufwands. Insbesondere wird also vorgeschlagen, KI-Modelle mit der Intelligenz des Maschinenbedieners zu verbinden bzw. zu koppeln, um den Aufwand zu vermindern. Durch wenige Bedienereingaben des Maschinenbedieners kann eine Teilautomatisierung erreicht werden.

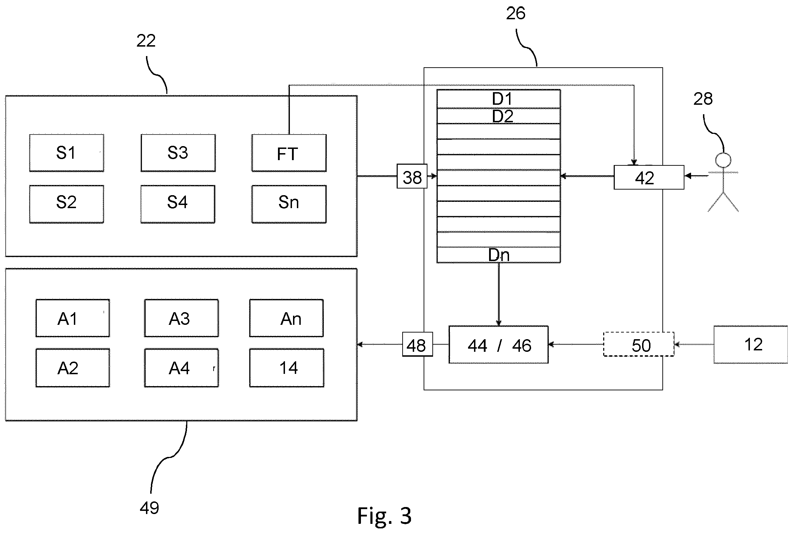

In Figur 3 ist in diesem Zusammenhang der erfindungsgemäße Ansatz dargestellt. Dargestellt ist insbesondere, dass ein Maschinenbediener 28 über eine Bedienerschnittstelle 42 mit einer erfindungsgemäßen Vorrichtung 26 interagiert. Über eine Sensorschnittstelle 38 kann die Vorrichtung Daten eines Sensors 22 empfangen. Die über die Bedienerschnittstelle 42 und die Sensorschnittstelle 38 empfangenen Daten D1..Dn können dabei beispielsweise einen Greifpunkt, eine Anzahl von Werkstücken in einem Stapel, eine Ausrichtung des Teils, ein Start/Stop der Maschine, eine Notwendigkeit eines Wendens, eine Notwendigkeit eines Zwischenlagerns, eine Doppelblecherkennung, einen Ablagepunkt, eine Blechdicke sowie andere Informationen betreffen/umfassen. Der Sensor 22 kann insbesondere eine kombinierte Farbbild- und Tiefenkamera umfassen. Zudem kann der Sensor aber auch weitere Datenquellen S1..Sn, wie einen Doppelblechsensor, einen Blechdickensensor, einen Kraftsensor und einen Greiffolgesensor sowie andere Sensoren umfassen. In der Auswerteeinheit 44 werden die verschiedenen Daten verarbeitet. In der Planungseinheit 46 wird ein Ladevorgang geplant. Im dargestellten Ausführungsbeispiel sind die Auswerteeinheit 44 und die Planungseinheit 46 gemeinsam implementiert. Die Planungseinheit 46 ist über die Steuerschnittstelle 48 mit dem Laderoboter 14 verbunden. Ebenfalls können weitere Systeme/Aktoren A1..An angebunden sein. Beispielsweise kann auch eine Ansteuerung der Fördertechnik, einer Wendeeinheit, eines Zwischenlagenentferners, eines Greifer-Magazins, eines Doppelblechtrenners oder anderer Einheiten vorgesehen sein. Die Blech- oder Holzbearbeitungsmaschine 12 kann über eine (optionale) Maschinenschnittstelle 50 ebenfalls an die Auswerteeinheit und/oder die Planungseinheit angebunden sein.

Der erfindungsgemäße Ansatz sieht in einer bevorzugten Ausgestaltung vor, dass durch eine Farb- und Tiefenkamera sowohl ein Farbbild als auch ein Tiefenbild einer Palette und der darauf befindlichen Werkstückeerfasst wird. Der Maschinenbediener definiert dann zunächst über eine Bedienereingabe Position im Bild bzw. die Lage des Werkstücks. Diese kann dann zur Segmentierung des Farbbilds und zu einer Maskenerstellung genutzt werden. Es wird eine Bildmaske erzeugt, die ausschließlich das Werkstück umfasst. Diese Bildmaske kann dann auf das Tiefenbild sowie auch auf das Farbbild angewendet werden. Das resultierende Tiefenbildsegment kann genutzt werden, um die Oberflächenebene des Bauteils zu entnehmen. Da ein Sensorsignal einer Tiefenkamera oft vergleichsweise stark rauschbehaftet ist, ist eine Anwendung eines RANSAC-Algorithmus dabei vorteilhaft. Das Farbbildsegment wird in Kombination mit den Daten der Ebene genutzt, um die perspektivische Verzerrung zu entfernen und in dieser Weise eine orthografische Ansicht des Bauteils zu erstellen. Die Definition der Greifpunkte kann sowohl vor dem Erstellen der orthografischen Ansicht als auch danach erfolgen. Insbesondere kann dies in einer weiteren Bedienereingabe des Maschinenbedieners erfolgen. Eine Visualisierung des Greifers auf der orthografischen Ansicht des Werkstücks erleichtert den Prozess für den Maschinenbediener und ermöglicht insoweit auch einem unerfahrenen Maschinenbediener eine effiziente Nutzung des erfindungsgemäßen Ansatzes. In der orthografischen Ansicht kann die Ausrichtung des Bauteils beim Ablegen und der Ablagepunkt definiert werden. Durch eine orthografische Ansicht ergibt sich aufgrund der nicht vorhandenen Verzerrung eine effiziente Lösung und Erkennung potentieller Kollisionen mit dem Umfeld oder mit anderen Werkstücken.

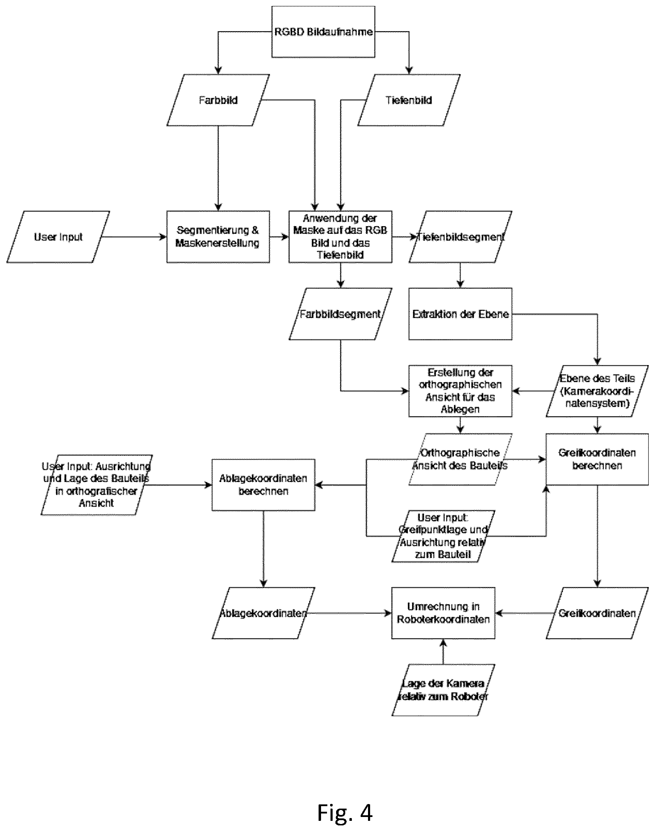

In Figur 4 ist in diesem Zusammenhang ein Ablaufdiagramm dargestellt, das den Ablauf des erfindungsgemäßen Ansatzes in einer Ausgestaltung zeigt.

Wenn insbesondere davon ausgegangen wird, dass beim Zuführen der Werkstücke eine ausreichende Stapelgenauigkeit auf dem Ladungsträger vorliegt, genügt dieser Ansatz zum kompletten Automatisieren des Beladeprozesses.

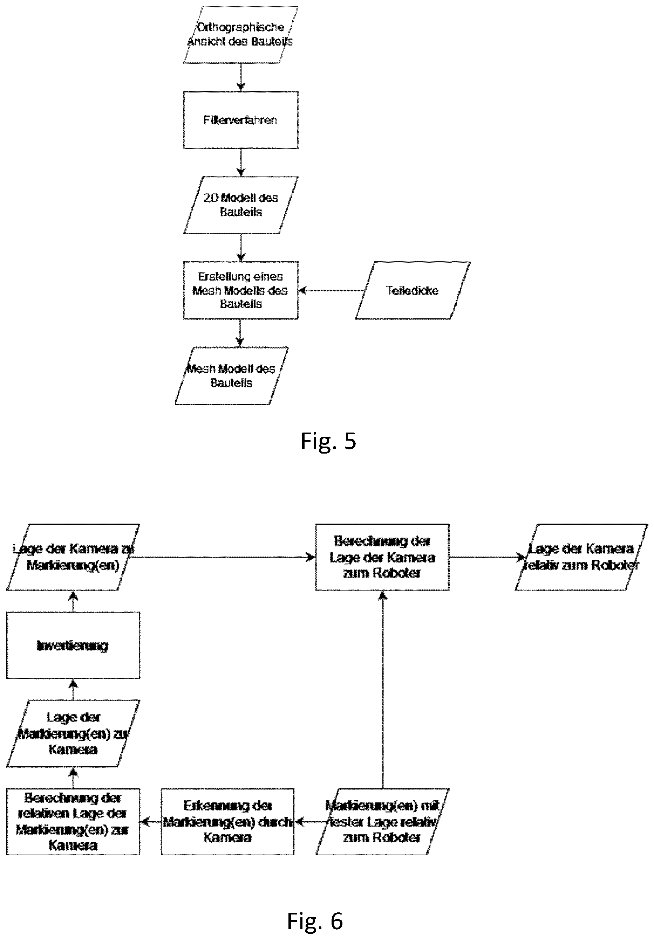

Falls davon ausgegangen wird, dass keine ausreichende Stapelgenauigkeit bei aufeinandergestapelten Werkstücken vorliegt, kann der Versatz der Werkstücke durch eine Suche des zuvor definierten Farbbildsegments in der orthografischen Ansicht in einer aktuellen Bildaufnahme bzw. basierend auf einem aktualisierten Sensorsignal erkannt werden. Die relative Lage des Greifpunkts und dessen Ausrichtung auf den Bauteil können dann genutzt werden, um einen neuen Greifpunkt zu ermitteln. Ebenfalls besteht die Möglichkeit, Mesh-Dateien der Bauteile durch die orthografische Ansicht zu erstellen. Der entsprechende Ablauf des Prozesses ist in Figur 5 schematisch dargestellt.

Das Mesh-Modell kann für die Suche des Werkstücks auf erneuten Bildaufnahmen (aktualisiertem Sensorsignal) auch bei einem Entladeprozess genutzt werden, bei dem im Entladebereich ein weiterer Laderoboter vorgesehen ist. Bei vergleichsweise dünnen Blechen oder einer Kameraposition senkrecht über der Palette bzw. über dem Förderband kann ggf. auch ein 2D-Modell des Werkstücks ausreichend sein.

In Figur 6 ist eine weitere optionale Ergänzung dargestellt. Durch das Anbringen von Markierungen mit fixer Lage relativ zum Laderoboter kann die Kamera beliebig platziert werden, wie in Figur 6 dargestellt.

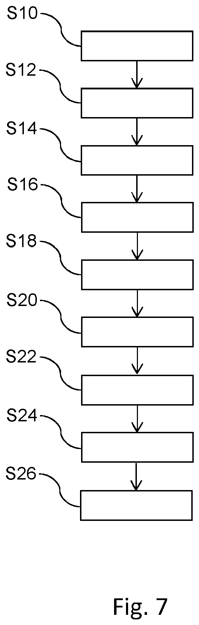

In Figur 7 ist schematisch ein erfindungsgemäßes Verfahren zum Beladen oder Entladen einer Blech- oder Holzbearbeitungsmaschine dargestellt. Das Verfahren umfasst Schritte des Empfangens S10 eines Sensorsignals, des Erzeugens S12 einer Darstellung des Werkstücks, des Bereitstellens S14 der Darstellung, des Empfangens S16 einer Bedienereingabe, des Ermittelns S18 einer überarbeiteten Darstellung, des Bereitstellens S20 der überarbeiteten Darstellung, des Empfanges S22 einer weiteren Bedienereingabe, des Ermittelns S24 von Steuerbefehlen und des Ansteuerns S26 des Laderoboters. Das Verfahren kann beispielsweise in Software umgesetzt sein, die auf einem Maschinensystem einer Blechbearbeitungsmaschine ausgeführt wird.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

## Patentansprüche

1. Vorrichtung (26) zum Beladen oder Entladen einer Blech- oder Holzbearbeitungsmaschine (12), mit:
einer Sensorschnittstelle (38) zum Empfangen eines Sensorsignals mit Informationen zu Werkstücken (16) in einem Ladebereich (24) der Blech- oder Holzbearbeitungsmaschine;
einer Darstellungseinheit (40) zum Erzeugen einer Darstellung der Werkstücke und des Ladebereichs basierend auf dem Sensorsignal;
einer Bedienerschnittstelle (42) zum Bereitstellen der Darstellung an einen Maschinenbediener (28) und zum Empfangen einer Bedienereingabe des Maschinenbediener mit Informationen zu einer Position der Werkstücke in der Darstellung;
einer Auswerteeinheit (44) zum Ermitteln einer überarbeiteten Darstellung der Werkstücke und des Ladebereichs basierend auf dem Sensorsignal und der Bedienereingabe, wobei die Bedienerschnittstelle zum Bereitstellen der überarbeiteten Darstellung an den Maschinenbediener und zum Empfangen einer weiteren Bedienereingabe mit Informationen zu einem durchzuführenden Ladevorgang des Werkstücks ausgebildet ist;
einer Planungseinheit (46) zum Ermitteln von Steuerbefehlen für einen Laderoboter (14) zum Ausführen des durchzuführenden Ladevorgangs basierend auf dem Sensorsignal und der weiteren Bedienereingabe; und
einer Steuerschnittstelle (48) zum Ansteuern des Laderoboters zum Ausführen des Ladevorgangs basierend auf den Steuerbefehlen.

2. Vorrichtung (26) nach Anspruch 1, wobei die Sensorschnittstelle (38) zum Empfangen eines Sensorsignals mit einem Farbbild und einem Tiefenbild der Werkstücke (16) in dem Ladebereich (24) ausgebildet ist.

3. Vorrichtung (26) nach einem der vorstehenden Ansprüche, wobei die Darstellungseinheit (40) zum Erzeugen einer Bilddarstellung ausgebildet ist.

4. Vorrichtung (26) nach einem der vorstehenden Ansprüche, wobei die Bedienerschnittstelle (42) ein Display umfasst, insbesondere ein Touchscreen-Display.

5. Vorrichtung (26) nach einem der vorstehenden Ansprüche, wobei die Bedienerschnittstelle zum Empfangen einer weiteren Bedienereingabe mit
einer Position eines Greifpunkts des Laderoboters (14) an dem Werkstück (16);
einer Ablageposition des Werkstücks; und/oder
einer Ausrichtung des Werkstücks bei der Ablage ausgebildet ist.

6. Vorrichtung (26) nach einem der vorstehenden Ansprüche, wobei die Auswerteeinheit (44)
zum Ermitteln einer Oberflächenebene eines Werkstücks (16) basierend auf einer Segmentierung und basierend auf der Bedienereingabe ausgebildet ist, insbesondere unter Anwendung eines RANSAC-Algorithmus; und/oder
zum Ermitteln einer orthografischen Ansicht ausgebildet ist.

7. Vorrichtung (26) nach einem der vorstehenden Ansprüche, wobei die Planungseinheit (46) zum Ermitteln von Steuerbefehlen mit Greif- und Ablagekoordinaten des Werkstücks (16) ausgebildet ist.

8. Vorrichtung (26) nach einem der vorstehenden Ansprüche, wobei die Planungseinheit (46) zum Ermitteln der Steuerbefehle
basierend auf vordefinierten und auf den Ladebereich (24) bezogenen Bahnvorgabedaten für die Bewegung des Laderoboters (14) ausgebildet ist, wobei die Bahnvorgabedaten vorzugsweise in einem Kalibrierungsprozess ermittelt wurden; und/oder
basierend auf vordefinierten und auf den Ladebereich bezogenen Sensorpositionsdaten für die Position des Sensors, wobei die Sensorpositionsdaten vorzugsweise in einem Kalibrierungsprozess ermittelt wurde.

9. Vorrichtung (26) nach einem der vorstehenden Ansprüche, wobei die Bedienerschnittstelle (42) zum Empfangen einer Bedienereingabe mit einer Dicke der Werkstücke (16) ausgebildet ist.

10. Vorrichtung (26) nach einem der vorstehenden Ansprüche, wobei
die Bedienerschnittstelle (42) zum Empfangen einer Bedienereingabe mit Informationen zu einer Position von Werkstücken (16) in einer oberen von mehreren Schichten von Werkstücken in der Darstellung ausgebildet ist;
die Planungseinheit (46) zum Erkennen eines Versatzes eines Werkstücks in einer zweiten Schicht nach einem Ladevorgang eines Werkstücks in einer ersten Schicht ausgebildet ist; und
die Planungseinheit zum Ermitteln der Steuerbefehle basierend auf dem Versatz ausgebildet ist.

11. System (10) zum Beladen oder Entladen einer Blech- oder Holzbearbeitungsmaschine (12), mit:
einer Vorrichtung (26) nach einem der vorstehenden Ansprüche;
einem Sensor zum Erfassen des Ladebereichs (24); und
einem Laderoboter (14) zum Ausführen des Ladevorgangs basierend auf den Steuerbefehlen, insbesondere einem Industrieroboter mit einem Manipulatorarm.

12. System (10) nach Anspruch 11, wobei der Sensor eine auf einen Ladebereich (24) der Blech- oder Holzbearbeitungsmaschine (12) gerichtete Farbkamera und/oder Tiefenkamera umfasst.

13. System (10) nach einem der Ansprüche 11 bis 12, wobei der Laderoboter zum Ausführen eines Beladevorgangs ausgebildet ist und der Sensor zum Erfassen eines Beladebereichs ausgebildet ist, mit:
einem weiteren Laderoboter (30) zum Ausführen eines Entladevorgangs; und
einem weiteren Sensor (36) zum Erfassen eines Entladebereichs und zum Bereitstellen eines Sensorsignals mit Informationen zu Werkstücken (16) in dem Entladebereich, wobei
die Planungseinheit (46) zum Ermitteln von Steuerbefehlen für den weiteren Laderoboter zum Ausführen eines durchzuführenden Entladevorgangs basierend auf dem Sensorsignal, dem weiteren Sensorsignal und der weiteren Bedienereingabe ausgebildet ist; und
die Steuerschnittstelle (48) zum Ansteuern des weiteren Laderoboters zum Ausführen des Entladevorgangs basierend auf den Steuerbefehlen ausgebildet ist.

14. Verfahren zum Beladen oder Entladen einer Blech- oder Holzbearbeitungsmaschine (12), mit den Schritten:
Empfangen (S10) eines Sensorsignals mit Informationen zu Werkstücken (16) in einem Ladebereich (24) der Blech- oder Holzbearbeitungsmaschine;
Erzeugen (S12) einer Darstellung der Werkstücke und des Ladebereichs basierend auf dem Sensorsignal;
Bereitstellen (S14) der Darstellung an einen Maschinenbediener (28);
Empfangen (S16) einer Bedienereingabe des Maschinenbediener mit Informationen zu einer Position der Werkstücke in der Darstellung;
Ermitteln (S18) einer überarbeiteten Darstellung der Werkstücke und des Ladebereichs basierend auf dem Sensorsignal und der Bedienereingabe;
Bereitstellen (S20) der überarbeiteten Darstellung an den Maschinenbediener;
Empfangen (S22) einer weiteren Bedienereingabe mit Informationen zu einem durchzuführenden Ladevorgang des Werkstücks;
Ermitteln (S24) von Steuerbefehlen für einen Laderoboter (14) zum Ausführen des durchzuführenden Ladevorgangs basierend auf dem Sensorsignal und der weiteren Bedienereingabe; und
Ansteuern (S26) des Laderoboters zum Ausführen des Ladevorgangs basierend auf den Steuerbefehlen.

15. Computerprogrammprodukt mit Programmcode zum Ausführen der Schritte des Verfahrens nach Anspruch 14, wenn der Programmcode auf einem Computer ausgeführt wird.

## Claims

1. A device (26) for loading or unloading a sheet metal or woodworking machine (12), comprising:
a sensor interface (38) for receiving a sensor signal with information about workpieces (16) in a loading area (24) of the sheet metal or woodworking machine;
a display unit (40) for generating a representation of the workpieces and the loading area based on the sensor signal;
an operator interface (42) for providing the representation to a machine operator (28) and for receiving an operator input from the machine operator with information about a position of the workpieces in the representation;
an evaluation unit (44) for determining a revised representation of the workpieces and the loading area based on the sensor signal and the operator input, wherein the operator interface is configured for providing the revised representation to the machine operator and for receiving a further operator input with information about a loading operation of the workpiece to be performed;
a planning unit (46) for determining control commands for a loading robot (14) for executing the loading operation to be performed based on the sensor signal and the further operator input; and
a control interface (48) for controlling the loading robot for executing the loading operation based on the control commands.

2. The device (26) according to claim 1, wherein the sensor interface (38) is configured for receiving a sensor signal with a color image and a depth image of the workpieces (16) in the loading area (24).

3. The device (26) according to one of the preceding claims, wherein the display unit (40) is configured for generating an image representation.

4. The device (26) according to one of the preceding claims, wherein the operator interface (42) comprises a display, in particular a touchscreen display.

5. The device (26) according to one of the preceding claims, wherein the operator interface is configured for receiving a further operator input with
a position of a gripping point of the loading robot (14) on the workpiece (16);
a deposit position of the workpiece; and/or
an orientation of the workpiece during deposit.

6. The device (26) according to one of the preceding claims, wherein the evaluation unit (44)
is configured for determining a surface plane of a workpiece (16) based on a segmentation and based on the operator input, in particular using a RANSAC algorithm; and/or
is configured for determining an orthographic view.

7. The device (26) according to one of the preceding claims, wherein the planning unit (46) is configured for determining control commands with gripping and deposit coordinates of the workpiece (16).

8. The device (26) according to one of the preceding claims, wherein the planning unit (46) is configured for determining the control commands
based on predefined path specification data related to the loading area (24) for the movement of the loading robot (14), wherein the path specification data were preferably determined in a calibration process; and/or
based on predefined sensor position data related to the loading area for the position of the sensor, wherein the sensor position data were preferably determined in a calibration process.

9. The device (26) according to one of the preceding claims, wherein the operator interface (42) is configured for receiving an operator input with a thickness of the workpieces (16).

10. The device (26) according to one of the preceding claims, wherein
the operator interface (42) is configured for receiving an operator input with information about a position of workpieces (16) in an upper one of multiple layers of workpieces in the representation;
the planning unit (46) is configured for detecting an offset of a workpiece in a second layer after a loading operation of a workpiece in a first layer; and
the planning unit is configured for determining the control commands based on the offset.

11. A system (10) for loading or unloading a sheet metal or woodworking machine (12), comprising:
a device (26) according to one of the preceding claims;
a sensor for capturing the loading area (24); and
a loading robot (14) for executing the loading operation based on the control commands, in particular an industrial robot with a manipulator arm.

12. The system (10) according to claim 11, wherein the sensor comprises a color camera and/or a depth camera directed at a loading area (24) of the sheet metal or woodworking machine (12).

13. The system (10) according to one of claims 11 to 12, wherein the loading robot is configured for executing a loading operation and the sensor is configured for capturing a loading area, comprising:
a further loading robot (30) for executing an unloading operation; and
a further sensor (36) for capturing an unloading area and for providing a sensor signal with information about workpieces (16) in the unloading area, wherein
the planning unit (46) is configured for determining control commands for the further loading robot for executing an unloading operation to be performed based on the sensor signal, the further sensor signal and the further operator input; and
the control interface (48) is configured for controlling the further loading robot for executing the unloading operation based on the control commands.

14. A method for loading or unloading a sheet metal or woodworking machine (12), comprising the steps of:
receiving (S10) a sensor signal with information about workpieces (16) in a loading area (24) of the sheet metal or woodworking machine;
generating (S12) a representation of the workpieces and the loading area based on the sensor signal;
providing (S14) the representation to a machine operator (28);
receiving (S16) an operator input from the machine operator with information about a position of the workpieces in the representation;
determining (S18) a revised representation of the workpieces and the loading area based on the sensor signal and the operator input;
providing (S20) the revised representation to the machine operator;
receiving (S22) a further operator input with information about a loading operation of the workpiece to be performed;
determining (S24) control commands for a loading robot (14) for executing the loading operation to be performed based on the sensor signal and the further operator input; and
controlling (S26) the loading robot for executing the loading operation based on the control commands.

15. A computer program product with program code for performing the steps of the method according to claim 14 when the program code is executed on a computer.

## Revendications

1. Dispositif (26) de chargement ou de déchargement d'une machine à travailler la tôle ou le bois (12), comprenant :
une interface de capteur (38) pour recevoir un signal de capteur avec des informations sur des pièces (16) dans une zone de chargement (24) de la machine à travailler la tôle ou le bois ;
une unité d'affichage (40) pour générer une représentation des pièces et de la zone de chargement sur la base du signal de capteur ;
une interface opérateur (42) pour fournir la représentation à un opérateur de machine (28) et pour recevoir une entrée opérateur de l'opérateur de machine avec des informations sur une position des pièces dans la représentation ;
une unité d'évaluation (44) pour déterminer une représentation révisée des pièces et de la zone de chargement sur la base du signal de capteur et de l'entrée opérateur, l'interface opérateur étant conçue pour fournir la représentation révisée à l'opérateur de machine et pour recevoir une entrée opérateur supplémentaire avec des informations sur une opération de chargement de la pièce à effectuer ;
une unité de planification (46) pour déterminer des commandes de contrôle pour un robot de chargement (14) pour exécuter l'opération de chargement à effectuer sur la base du signal de capteur et de l'entrée opérateur supplémentaire ; et
une interface de commande (48) pour commander le robot de chargement pour exécuter l'opération de chargement sur la base des commandes de contrôle.

2. Dispositif (26) selon la revendication 1, dans lequel l'interface de capteur (38) est conçue pour recevoir un signal de capteur avec une image couleur et une image de profondeur des pièces (16) dans la zone de chargement (24).

3. Dispositif (26) selon l'une des revendications précédentes, dans lequel l'unité d'affichage (40) est conçue pour générer une représentation d'image.

4. Dispositif (26) selon l'une des revendications précédentes, dans lequel l'interface opérateur (42) comprend un écran, en particulier un écran tactile.

5. Dispositif (26) selon l'une des revendications précédentes, dans lequel l'interface opérateur est conçue pour recevoir une entrée opérateur supplémentaire avec
une position d'un point de préhension du robot de chargement (14) sur la pièce (16) ;
une position de dépôt de la pièce ; et/ou
une orientation de la pièce lors du dépôt.

6. Dispositif (26) selon l'une des revendications précédentes, dans lequel l'unité d'évaluation (44)
est conçue pour déterminer un plan de surface d'une pièce (16) sur la base d'une segmentation et sur la base de l'entrée opérateur, en particulier en appliquant un algorithme RANSAC ; et/ou
est conçue pour déterminer une vue orthographique.

7. Dispositif (26) selon l'une des revendications précédentes, dans lequel l'unité de planification (46) est conçue pour déterminer des commandes de contrôle avec des coordonnées de préhension et de dépôt de la pièce (16).

8. Dispositif (26) selon l'une des revendications précédentes, dans lequel l'unité de planification (46) est conçue pour déterminer les commandes de contrôle
sur la base de données de spécification de trajectoire prédéfinies et relatives à la zone de chargement (24) pour le mouvement du robot de chargement (14), les données de spécification de trajectoire ayant de préférence été déterminées dans un processus de calibrage ; et/ou
sur la base de données de position de capteur prédéfinies et relatives à la zone de chargement pour la position du capteur, les données de position de capteur ayant de préférence été déterminées dans un processus de calibrage.

9. Dispositif (26) selon l'une des revendications précédentes, dans lequel l'interface opérateur (42) est conçue pour recevoir une entrée opérateur avec une épaisseur des pièces (16).

10. Dispositif (26) selon l'une des revendications précédentes, dans lequel
l'interface opérateur (42) est conçue pour recevoir une entrée opérateur avec des informations sur une position de pièces (16) dans une couche supérieure de plusieurs couches de pièces dans la représentation ;
l'unité de planification (46) est conçue pour reconnaître un décalage d'une pièce dans une deuxième couche après une opération de chargement d'une pièce dans une première couche ; et
l'unité de planification est conçue pour déterminer les commandes de contrôle sur la base du décalage.

11. Système (10) de chargement ou de déchargement d'une machine à travailler la tôle ou le bois (12), comprenant :
un dispositif (26) selon l'une des revendications précédentes ;
un capteur pour détecter la zone de chargement (24) ; et
un robot de chargement (14) pour exécuter l'opération de chargement sur la base des commandes de contrôle, en particulier un robot industriel avec un bras manipulateur.

12. Système (10) selon la revendication 11, dans lequel le capteur comprend une caméra couleur et/ou une caméra de profondeur dirigée vers une zone de chargement (24) de la machine à travailler la tôle ou le bois (12).

13. Système (10) selon l'une des revendications 11 à 12, dans lequel le robot de chargement est conçu pour exécuter une opération de chargement et le capteur est conçu pour détecter une zone de chargement, comprenant :
un autre robot de chargement (30) pour exécuter une opération de déchargement ; et
un autre capteur (36) pour détecter une zone de déchargement et pour fournir un signal de capteur avec des informations sur des pièces (16) dans la zone de déchargement,
l'unité de planification (46) étant conçue pour déterminer des commandes de contrôle pour l'autre robot de chargement pour exécuter une opération de déchargement à effectuer sur la base du signal de capteur, de l'autre signal de capteur et de l'entrée opérateur supplémentaire ; et
l'interface de commande (48) étant conçue pour commander l'autre robot de chargement pour exécuter l'opération de déchargement sur la base des commandes de contrôle.

14. Procédé de chargement ou de déchargement d'une machine à travailler la tôle ou le bois (12), comprenant les étapes suivantes :
réception (S10) d'un signal de capteur avec des informations sur des pièces (16) dans une zone de chargement (24) de la machine à travailler la tôle ou le bois ;
génération (S12) d'une représentation des pièces et de la zone de chargement sur la base du signal de capteur ;
fourniture (S14) de la représentation à un opérateur de machine (28) ;
réception (S16) d'une entrée opérateur de l'opérateur de machine avec des informations sur une position des pièces dans la représentation ;
détermination (S18) d'une représentation révisée des pièces et de la zone de chargement sur la base du signal de capteur et de l'entrée opérateur ;
fourniture (S20) de la représentation révisée à l'opérateur de machine ;
réception (S22) d'une entrée opérateur supplémentaire avec des informations sur une opération de chargement de la pièce à effectuer ;
détermination (S24) de commandes de contrôle pour un robot de chargement (14) pour exécuter l'opération de chargement à effectuer sur la base du signal de capteur et de l'entrée opérateur supplémentaire ; et
commande (S26) du robot de chargement pour exécuter l'opération de chargement sur la base des commandes de contrôle.

15. Produit de programme informatique avec un code de programme pour exécuter les étapes du procédé selon la revendication 14, lorsque le code de programme est exécuté sur un ordinateur.
